# FASCICULE DE BREVET EUROPEEN

(11) **EP 4 543 620 B1**
(45) Date de publication et mention de la délivrance du brevet: **27.05.2026**
(21) Numéro de dépôt: 23732891.9
(22) Date de dépôt: 13.06.2023
(51) Int. Cl.: B23K 26/12, B23K 26/16, B23K 26/20, B65B 7/28, B29C 65/16, B23K 26/70

(54) **DISPOSITIF DE SOUDAGE D'UN BOUCHON DE CONTAINER APTE À CONTENIR UNE SUBSTANCE MÉDICINALE ET PROCÉDÉ DE SOUDAGE**
VORRICHTUNG ZUM SCHWEISSEN EINER KAPPE EINES BEHÄLTERS ZUR AUFNAHME EINER MEDIZINISCHEN SUBSTANZ UND SCHWEISSVERFAHREN DAFÜR
DEVICE FOR WELDING A CAP OF A CONTAINER SUITABLE FOR CONTAINING A MEDICINAL SUBSTANCE AND WELDING METHOD THEREOF

(30) Priorité: 21.06.2022 BE 202205486
(43) Date de publication de la demande: 30.04.2025
(73) Titulaire: Aseptic Technologies, 5032 Les Isnes (BE)
(72) Inventeur: BALERIAUX, Patrick, 6120 Ham-sur-Heure-Nalinnes (BE); MARECHAL, Julien, Houston, Texas 77041 (US)
(74) Mandataire: Gevers Patents
(86) Numéro de dépôt international: PCT/EP2023/065737
(87) Numéro de publication internationale: WO 2023/247252

(56) Documents cités:
- DE-A1- 10 257 112
- DE-C1- 10 005 593
- JP-A- 2007 261 666

## Description

### Domaine technique

La présente invention concerne un dispositif de soudage d'un bouchon de container apte à contenir une substance médicinale et un procédé de soudage.

### Art antérieur

Des containers aptes à contenir une substance médicinale (telles que des vaccins) ou d'autres substances biologiques (telles que des cellules) sont prévus avec un bouchon fermé hermétiquement mais qui peut être percé par une aiguille afin d'introduire la substance dans le container. Une fois l'aiguille retirée, il est souhaité de rendre le bouchon à nouveau hermétique. Pour cela, un laser peut être utilisé pour souder le bouchon à l'endroit où l'aiguille a percé le bouchon.

Le document DE10005593 décrit un dispositif pour le soudage par points, mais ce dispositif n'offre pas suffisamment de garantie de sécurité.

Un problème de sécurité se pose avec les lasers, ces derniers pouvant être dangereux s'ils ne sont pas actionnés avec précaution.

Il y a un donc un besoin pour un dispositif de soudage de bouchon de containers qui soit sûr.

### Exposé de l'invention

À cet effet, l'invention propose un dispositif de soudage d'un bouchon de container apte à contenir une substance médicinale, le dispositif comprenant un laser de soudage du container, un canon définissant une chambre de tir du laser, le canon étant mobile entre plusieurs positions dont une position de soudage du container et une position à vide, un obturateur du laser, le canon ouvrant l'obturateur dans la position de soudage et fermant l'obturateur dans la position à vide. Le dispositif comprend en outre une jupe apte à entraver ou autoriser le passage du canon entre la position à vide et la position de soudage.

Selon une variante, l'obturateur est mobile en rotation et/ou le canon est mobile en translation.

Selon une variante non couverte par l'invention, le dispositif comprend en outre des organes de conversion de la translation du canon en une rotation de l'obturateur.

Selon une variante non couverte par l'invention, les organes de conversion comprennent une crémaillère solidaire du canon et une roue dentée entrainée par la crémaillère, l'obturateur étant solidaire de la roue dentée.

Selon une variante non couverte par l'invention, la fermeture de l'obturateur par le canon place l'obturateur dans un état fermé en travers de la direction de tir du laser.

Selon une variante non couverte par l'invention, l'ouverture de l'obturateur par le canon place l'obturateur dans un état ouvert dans une paroi du canon.

Selon une variante, l'obturateur est inaccessible depuis l'extérieur du dispositif.

Selon une variante non couverte par l'invention, le canon est mobile en translation à l'encontre d'un ressort.

Selon une variante non couverte par l'invention, le ressort sollicite le canon vers la position à vide.

Selon une variante, le dispositif comprend en outre des capteurs de détection de l'ouverture et de la fermeture de l'obturateur, la détection de l'ouverture ou de la fermeture de l'obturateur autorisant ou interdisant le tir par le laser.

Selon une variante, un capteur de détection de l'ouverture de l'obturateur et un capteur de détection de fermeture de l'obturateur sont actionnés par des éléments différents du dispositif, de préférence un capteur de l'ouverture de l'obturateur est actionné par le canon et un capteur de fermeture de l'obturateur est actionné par l'obturateur.

Selon une variante, la jupe est apte à entraver le passage du canon entre la position à vide et la position de soudage si le dispositif est dans un positionnement incorrect par rapport au container ou est apte à autoriser le passage du canon entre la position à vide et la position de soudage si le dispositif est dans un positionnement correct par rapport au container.

Selon une variante, la jupe est un cylindre de centrage sur un container à souder.

Selon une variante, le dispositif comprend en outre des orifices d'aération.

Selon une variante, des orifices portés par un boîtier du dispositif sont en regard des orifices du canon dans la position à vide du canon et sont obturés dans la position de soudage du canon.

Selon une variante, le dispositif comprend en outre une aspiration apte à aspirer des fumées au travers des orifices

L'invention se rapporte aussi à un procédé de soudage d'un bouchon de container apte à contenir une substance médicinale, le procédé comprenant les étapes de fourniture d'un dispositif tel que décrit précédemment, le canon étant en position à vide, de positionnement du dispositif sur un container, de soudage du bouchon du container.

Selon une variante, le dispositif comprenant en outre un capteur de détection de l'ouverture de l'obturateur et un capteur de détection de la fermeture de l'obturateur, le tir du laser étant possible si le capteur de détection de l'ouverture de l'obturateur détecte l'ouverture de l'obturateur et/ou si le capteur de détection de fermeture de l'obturateur ne détecte pas la fermeture de l'obturateur ; le tir du laser étant interdit si le capteur de détection de l'ouverture de l'obturateur ne détecte pas l'ouverture de l'obturateur et/ou si le capteur de détection de fermeture de l'obturateur détecte la fermeture de l'obturateur.

Selon une variante non couverte par l'invention, après le soudage du bouchon d'un container, le dispositif est déplacé pour un positionnement sur un autre container avec le tir du laser interdit par le canon en position à vide.

Selon une variante non couverte par l'invention, le dispositif est solidaire d'un bras robotisé.

Selon une variante, la jupe est apte à entraver le passage du canon entre la position à vide et la position de soudage si le dispositif est dans un positionnement incorrect par rapport au container ou est apte à autoriser le passage du canon entre la position à vide et la position de soudage si le dispositif est dans un positionnement correct par rapport au container.

Selon une variante, le dispositif comprenant des orifices d'aération, le procédé comprenant une étape d'aération de fumées.

Selon une variante, le procédé comprend entre deux étapes de soudage de container, l'aération du dispositif au travers des orifices en regard, et au cours d'une étape de soudage, l'étanchéité à l'intérieur du dispositif par l'obturation des orifices.

Selon une variante, l'aération de fumées est faite par aspiration des fumées.

L'usage, dans ce document, du verbe « comprendre », de ses variantes, ainsi que ses conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier », « deuxième », etc. sont, quant à eux, utilisés dans le cadre de ce document exclusivement pour différencier différents éléments, et ce sans impliquer d'ordre entre ces éléments.

L'ensemble des modes de réalisation préférés ainsi que l'ensemble des avantages du dispositif de soudage selon l'invention se transposent mutatis mutandis au présent procédé, et inversement.

### Brève description des figures

D'autres caractéristiques et avantages de la présente invention apparaîtront à la lecture de la description détaillée qui suit pour la compréhension de laquelle on se reportera aux figures annexées qui montrent :
- la figure 1, une vue schématique d'un exemple de réalisation d'un dispositif de soudage de container sans container ;
- la figure 2, une vue schématique du dispositif de la figure 1 avec un container
- la figure 3, une vue schématique d'un autre aspect du dispositif ;
- la figure 4, une vue schématique du dispositif de la figure 3 avec un container.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

L'invention se rapporte à un dispositif de soudage d'un bouchon de container apte à contenir une substance médicinale. Le dispositif comprend un laser de soudage du container et un canon définissant une chambre de tir du laser. Le canon est mobile entre plusieurs positions, dont une position de soudage du container et une position à vide. Le dispositif comprend également un obturateur du laser, le canon ouvrant l'obturateur dans la position de soudage et fermant l'obturateur dans la position à vide. Ainsi, dans la position à vide du canon, l'obturateur empêche qu'un tir de laser provienne du dispositif, ce qui rend le dispositif plus sûr.

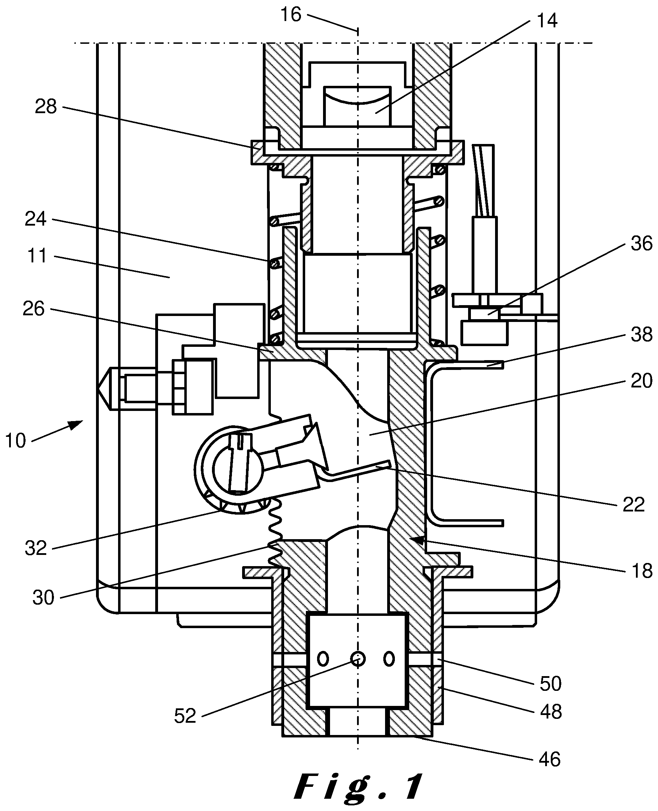

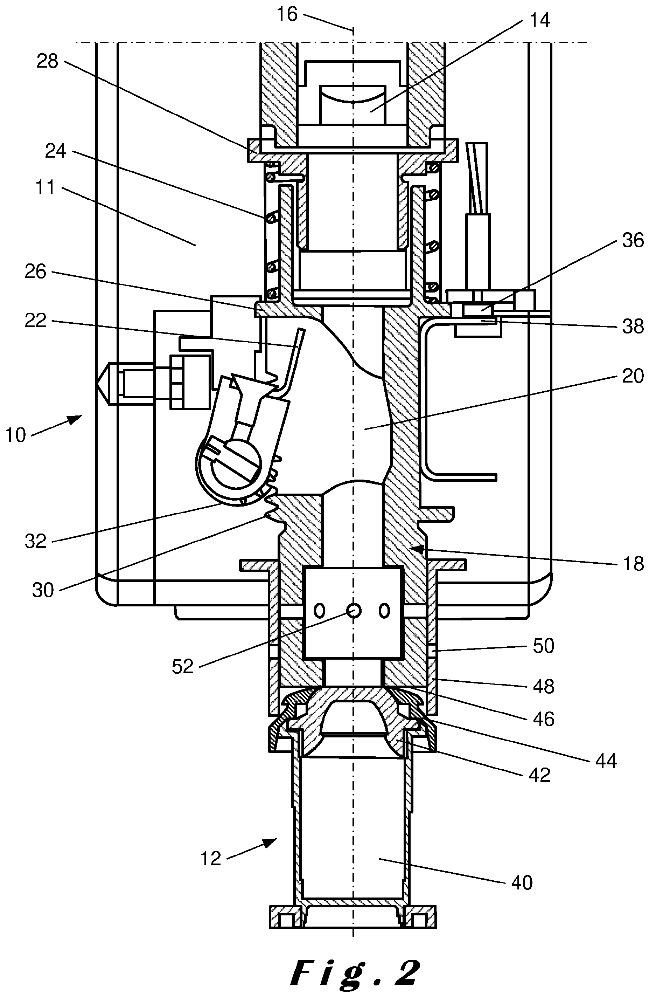

La figure 1 illustre une vue schématique d'un exemple de réalisation d'un dispositif 10 de soudage d'un bouchon de container, sans la présence d'un container. La figure 2 illustre ne vue schématique du dispositif 10 de la figure 1 avec la présence d'un container 12.

Le container 12 est apte à recevoir une substance qui peut être une substance médicinale, pharmaceutique. L'usage dans ce document de l'expression « substance médicinale » ou « substance pharmaceutique » couvre à la fois tout type de médicament, de nature chimique ou biologique, ou tout ingrédient destiné à être incorporé dans la formulation d'un médicament, ainsi que toutes autres substances biologiques nécessitant un stockage à basse température, telles que des cellules par exemple. La substance est de préférence fluide, liquide. La substance peut être destinée à être injectée dans le corps d'un patient, humain ou animal, par exemple avec une seringue. La substance peut être injectée en une fois dans le patient, ou de manière continue. Le container est susceptible de recevoir une quantité prédéfinie de substance médicinale. Par exemple, le container peut recevoir une seule dose de substance. La quantité de substance correspond alors à ce qui est destiné à être administré en une fois dans le patient.

A titre d'exemple, le container 12 représenté sur la figure 2 comporte un flacon 40, apte à contenir la substance. Le flacon 40 est fermé par un bouchon 42. Possiblement, le bouchon 42 est surmonté par une bague 44. La bague 44 solidarise le bouchon 42 au flacon 40. Cette structure de container pourrait être autre. Dans un premier temps, le container 12 peut être fourni vide avec le bouchon 42 (et le cas échéant, la bague 44) en place. Le container et l'air contenu dans le container 12 peuvent avoir été préalablement stérilisés, par exemple par exposition à un rayonnement ionisant. L'introduction de la substance dans le flacon 40 peut être réalisée au travers du bouchon 42 par une aiguille - le perçage est de préférence en une zone précise du bouchon 42. Une fois la substance introduite, l'aiguille est retirée du bouchon. Le bouchon peut se refermer naturellement lèvre à lèvre. Le dispositif 10 permet le soudage du bouchon par laser afin de le rendre de nouveau hermétique et éviter la contamination dans le temps de l'intérieur du container, et donc de la substance. Le bouchon 42 est en un matériau qui absorbe l'énergie du laser, créant une soudure dans le bouchon 42 rendant l'intérieur du container 12 hermétique.

Selon les figures 1 et 2, le dispositif 10 comprend un boîtier 11 et un laser 14. Le laser est susceptible d'émettre un tir selon une direction selon un axe 16. Le tir du laser est destiné à sortir du dispositif 10, afin de souder le bouchon 42 du container 12 positionné dans la direction de tir du laser. Le laser permet de souder le bouchon 42 du container 12 après retrait de l'aiguille d'introduction de la substance, afin d'assurer à nouveau la fermeture hermétique du bouchon et de garantir la stérilité dans le temps. La soudure se produit sur une partie de l'épaisseur du bouchon. L'énergie du laser est progressivement absorbée par le matériau du bouchon 42 et la soudure se fait en surface du bouchon 42, du côté du faisceau laser incident. L'absorbance du matériau du bouchon est calibrée de manière telle que l'énergie du faisceau laser soit totalement absorbée dans l'épaisseur du bouchon et que le faisceau laser ne passe pas à travers le bouchon 42 afin de ne pas nuire à la substance. La soudure se produit sur une épaisseur suffisante pour restaurer l'étanchéité du bouchon tout en assurant une résistance mécanique suffisante. La soudure se produit par exemple sur la moitié de l'épaisseur du bouchon 42 ou moins. Par exemple, la soudure peut se produire sur une épaisseur comprise entre 0,4 et 1mm pour un bouchon d'une épaisseur de 2mm.

Le dispositif 10 comprend un canon 18 définissant une chambre 20 de tir du laser. Un tel canon 18 assure la liaison entre le laser 14 et le container 12. Le canon 18 permet d'une part la connexion à une fibre qui peut délivrer le laser 14 et d'autre part la connexion au container 12. Cela permet de créer une interface de contact avec le container 12 qui soit indépendante de la fibre qui délivre le laser.

Le canon 18 est mobile entre plusieurs positions par rapport au boîtier 11. La figure 1 montre le canon en une position à vide et la figure 2 montre le canon en une position de soudage. D'autres positions sont envisageables, notamment des positions intermédiaires entre ces positions, ou des positions en butée supérieure et inférieure, au-delà des positions à vide et de soudage. La position à vide correspond à la position dans laquelle aucun container est présent. Ceci peut correspondre à une position au repos du dispositif 10, en fin de soudage d'un container. Ceci peut correspondre au déplacement du dispositif 10 pour un positionnement sur un autre container à souder. La position de soudage correspond à la position dans laquelle un container est présent et dans laquelle le dispositif est apte à tirer. Ceci peut correspondre à une position de fonctionnement du dispositif 10. Selon les figures 1 et 2, la position à vide correspond à une position basse du canon et la position de soudage à une position haute du canon. Le canon 18 peut être plus rentré dans le boîtier 11 en position de soudage qu'en position à vide. L'avantage des différentes positions est que le tir se produit lorsque le canon 18 est dans un position plus sûre par rapport à l'environnement.

Le dispositif 10 comprend aussi un obturateur 22 du laser. Dans la position de soudage, le canon 18 ouvre l'obturateur 22 (l'obturateur est dans un état ouvert). Dans la position à vide, le canon 18 ferme l'obturateur 22 (l'obturateur est dans un état fermé). Ceci permet de protéger les opérateurs contre un tir intempestif du laser qui pourrait être dangereux pour leur santé. En particulier, le contact du laser avec la peau ou surtout les yeux d'un opérateur pourrait présenter un danger pour l'opérateur. Ainsi, en plaçant l'obturateur 22 dans l'état fermé dans la position à vide - donc en l'absence de container, lorsque le dispositif n'est pas en état de souder - on prévient tout risque de danger. En outre, l'obturateur 22 est de préférence inaccessible depuis l'extérieur du dispositif 10. Ceci empêche la manipulation de l'obturateur 22 par un opérateur inexpérimenté. Toutefois, en plaçant le canon 18 dans la position de soudage pour souder le bouchon d'un container, l'obturateur passe dans l'état ouvert pour permettre le soudage. L'ouverture de l'obturateur est synchronisée avec la mise en position de soudage du canon. Ceci évite aussi de laisser l'obturateur fermé lors d'une opération de soudage et d'endommager le dispositif.

Le canon 18 peut être mobile en translation le long de l'axe 16, dans le boîtier 11. Ceci permet des mouvements du canon 18 qui soient parallèles à l'axe de tir du laser. Le canon 18 lui-même ne peut donc pas obturer le tir du laser, de manière malencontreuse. En outre, le canon 18 peut être mobile en translation à l'encontre d'un ressort 24. Ceci permet de simplifier le mouvement du canon et rendre le dispositif sûr. Le ressort 24 permet un rappel du canon 18 vers la position à vide - obturateur fermé. Ceci est avantageux car l'obturateur 22 est alors fermé lorsque le dispositif n'est pas utilisé. Selon les figures, le ressort 24 peut solliciter le canon 18 vers le bas, vers la position à vide. Le canon peut alors être mobile en translation verticalement, depuis une position à vide, vers le haut à l'encontre du ressort vers la position de soudage. En position de soudage du canon 18, le ressort 24 sollicite le canon 18 vers le bas, et donc sollicite le canon 18 contre le bouchon 42 d'un container 12 positionné en vue de son soudage. Ceci assure une bonne connexion entre le canon 18 et le bouchon 42, et donc le confinement du laser au sein du canon 18. En effet, on évite une possible sortie du laser par réflexion sur le bouchon. Ceci réduit les risques de brûlure de l'opérateur par le laser. Par ailleurs, le ressort 24 peut être interposé entre un épaulement 26 du canon 18 et un épaulement 28 du dispositif 10. L'épaulement 28 est fixe en position, ce qui permet de déplacer en translation l'épaulement 26 et le canon 18, parallèlement à l'axe 16.

L'obturateur 22 peut être mobile en rotation. Ceci permet de limiter l'encombrement au sein du dispositif 10 lors du déplacement de l'obturateur 22. L'obturateur 22 peut être monté mobile en rotation au boîtier 11, en dehors du canon 18, et peut pénétrer dans le canon 18 pour obturer le tir du laser. Selon un mode de réalisation, l'obturateur 22 est actionné par le canon 18 par l'intermédiaire d'organes de conversion de la translation du canon 18 en une rotation de l'obturateur 22. Les organes de conversion peuvent comprendre un mécanisme de bielles. Ils peuvent aussi comprendre une crémaillère 30 actionnant une roue dentée 32. Par exemple, l'obturateur 22 est solidaire de la roue 32 dentée entraînée par la crémaillère 30 solidaire du canon 18. La crémaillère 30 et la roue 32 permettent un entraînement simple de l'obturateur 22 lors des mouvements du canon 18. L'entraînement par roue dentée et crémaillère permet une synchronisation précise et simple entre les mouvements du canon 18 et de l'obturateur 22.

La fermeture de l'obturateur 22 par le canon 18 place l'obturateur dans un état fermé en travers de la direction de tir du laser - voire orthogonalement à l'axe 16. Selon la figure 1, l'obturateur 22 est dans l'état fermé dans le sens où l'obturateur entrave le passage du faisceau laser, ce qui rend le dispositif plus sûr. Le canon 18 peut comprendre un alésage central le long de l'axe 16 définissant la chambre 20 de tir du laser le long du canon. De façon avantageuse, l'obturateur 22 est un disque épousant la section transversale de la chambre. Ceci permet d'obturer convenablement la chambre 20.

L'ouverture de l'obturateur 22 par le canon 18 place l'obturateur dans un état ouvert, parallèlement à la paroi du canon. Selon la figure 2, l'obturateur 22 est dans l'état ouvert dans le sens où l'obturateur n'entrave plus le faisceau laser. Dans l'état ouvert, l'obturateur 22 est dégagé du champ de tir du laser. L'obturateur 22 permet alors le passage du tir de laser, ce qui permet le soudage. Dans l'état ouvert, l'obturateur peut remplacer la paroi du canon de sorte à être escamoté en dehors du champ de tir du laser.

Le dispositif 10 peut en outre comprendre des capteurs de détection de l'ouverture et de la fermeture de l'obturateur 22. La détection de l'ouverture ou de la fermeture de l'obturateur 22 autorise ou interdit la commande du tir par le laser. Ceci permet de renforcer la sécurité lors de l'utilisation du dispositif 10. Selon un aspect, le capteur de détection de l'ouverture doit détecter une ouverture de l'obturateur 22 pour autoriser le tir. Inversement, si le capteur de détection de la fermeture détecte une fermeture de l'obturateur 22, le tir est interdit. Selon un autre aspect, les informations des deux capteurs peuvent être combinées pour autoriser ou interdire le tir. Ainsi, l'autorisation de tir peut être donnée si le capteur de détection de l'ouverture détecte l'ouverture de l'obturateur et si le capteur de détection de la fermeture ne détecte pas la fermeture de l'obturateur (ou en d'autres termes, ne délivre pas de signal de fermeture). Inversement, l'interdiction du tir est commandée si le capteur de détection de la fermeture détecte la fermeture de l'obturateur et si le capteur de détection de l'ouverture ne détecte pas l'ouverture de l'obturateur (ou en d'autres termes, ne délivre pas de signal d'ouverture). En cas de signaux contradictoires, le tir est interdit. La combinaison des deux signaux permet de renforcer la sécurité du dispositif car permet de palier la défaillance d'un des capteurs.

En particulier, le dispositif 10 peut comprendre un capteur 36 de détection de l'ouverture de l'obturateur 22 visible sur les figures et un capteur (non visible sur les figures) de détection de la fermeture de l'obturateur 22.

A titre d'exemple, le capteur 36 de détection de l'ouverture de l'obturateur 22 est actionné par le canon 18. Ainsi, les mouvements du canon 18 déclenchent le capteur 36. Ceci permet de synchroniser les positions du canon 18 avec l'activation du capteur. Plus spécifiquement, le canon 18 peut actionner le capteur 36 lorsque le canon 18 est dans la position de soudage, afin de déclencher un signal indiquant que le canon est en position de soudage et que le tir est autorisé - autrement, le capteur ne délivre pas de signal, indiquant que le canon est en position à vide ou en tout cas, pas en position de soudage. Sur la figure 2, le canon 18 est dans la position de soudage, permettant l'actionnement du capteur 36 - et donc l'autorisation de tir. Sur la figure 1, le canon 18 est dans la position à vide, ne permettant pas l'actionnement du capteur 36 - et donc possiblement, l'interdiction de tir du laser. Il est envisageable que le canon 18 comporte un index 38 permettant l'actionnement du capteur 36. Selon la figure 2, l'index 38 actionne le capteur 36. Il est aussi envisageable que le capteur de détection de l'ouverture de l'obturateur 22 soit actionné par l'obturateur 22 lui-même. Par exemple, lorsque l'obturateur 22 est dans l'état ouvert, l'obturateur 22 actionne le capteur de détection de l'ouverture de l'obturateur 22. Il est envisageable que l'obturateur 22 comporte un index (non visible sur les figures) permettant l'actionnement du capteur de détection de l'ouverture de l'obturateur 22.

A titre d'exemple, le capteur de détection de la fermeture de l'obturateur 22 peut être actionné par l'obturateur 22. Ainsi, les mouvements de l'obturateur 22 déclenchent le capteur de détection de fermeture. Ceci permet de synchroniser les positions de l'obturateur avec l'activation du capteur de fermeture. Plus spécifiquement, l'obturateur 22 peut actionner le capteur lorsque l'obturateur 22 est dans l'état fermé, afin de déclencher un signal indiquant que l'obturateur 22 est dans l'état fermé et que le tir est interdit - autrement, le capteur ne délivre pas de signal, indiquant que l'obturateur est dans l'état ouvert ou en tout cas, pas dans l'état fermé. Sur la figure 1, l'obturateur est dans l'état fermé, permettant l'actionnement du capteur de détection de fermeture. Sur la figure 2, l'obturateur est dans l'état ouvert, ne permettant pas l'actionnement du capteur de fermeture - et donc permettant possiblement l'activation du laser. Il est envisageable que l'obturateur 22 comporte un index (non visible sur les figures) permettant l'actionnement du capteur de détection de la fermeture de l'obturateur 22. Il est aussi envisageable que le capteur de détection de la fermeture de l'obturateur 22 soit actionné par le canon 18. Par exemple, lorsque le canon 18 est dans la position à vide, le canon 18 actionne le capteur de détection de la fermeture de l'obturateur 22. Il est envisageable que le canon 18 comporte un index similaire à l'index 38 (visible sur les figures en contrebas de l'index 38, sur la même pièce profilée, mais sans référence) permettant l'actionnement du capteur de détection de la fermeture de l'obturateur 22.

De préférence, le capteur de détection de la fermeture de l'obturateur 22 et le capteur de détection de l'ouverture de l'obturateur 22 sont chacun associés aux mouvements de deux organes différents du dispositif (par exemple le canon 18 et l'obturateur 22). Le fait que chaque capteur soit associé aux mouvements de deux organes différents et que les signaux des deux capteurs soient pris en compte permet de renforcer la sécurité du dispositif. Si l'un des capteurs est défaillant et/ou si l'un des organes est défaillant dans son mouvement, cela peut conduire à des signaux contradictoires - et le tir du laser est alors interdit par sécurité pour éviter tout tir intempestif.

L'état des signaux émis par les deux capteurs peut être avantageusement combiné avec la position spatiale du dispositif 10, ce dispositif étant par exemple solidaire d'un bras robotisé. Lorsque le dispositif 10 n'est pas positionné dans l'espace à un endroit où le canon 18 est susceptible de se faire actionner par un container 12, le capteur 36 qui renseigne la position ouverte de l'obturateur 22 ne peut pas être activé tandis que le capteur qui renseigne de la position fermée de l'obturateur 22 est activé.

Dans la position de soudage, le dispositif 10 est en contact du container 12. Pour être précisément en contact avec le container 12, le boîtier 11 comprend une jupe 48. La jupe 48 peut épouser, entourer la forme du bouchon 42 du container. La jupe 48 est en saillie du dispositif 10. La jupe 18 est immobile par rapport au boîtier. La jupe 48 entoure une partie inférieure du canon 18. Le canon 18 est mobile en translation le long de la jupe 48. La jupe 48 peut être une jupe de sécurité. La jupe est une jupe de sécurité empêchant un tir du laser si le dispositif est dans un positionnement incorrect. La jupe est une jupe de sécurité empêchant un tir du laser si le dispositif est dans un positionnement incorrect par rapport à un container. Par positionnement incorrect ou correct, on entend par exemple un positionnement relatif entre le dispositif et le container. Également, par positionnement incorrect on entend un positionnement incorrect par décalage du dispositif par rapport à un container ou un positionnement incorrect en l'absence d'un container, par rapport à l'environnement. La jupe 48 empêche un tir si le dispositif 10 (et donc le canon 18) est dans un positionnement incorrect. La jupe 48 empêche un tir si le dispositif 10 (et donc le canon 18) est dans un positionnement incorrect par rapport au container 12, et en particulier du bouchon 42. La jupe 48 est apte à former une butée à l'encontre du changement de position du canon. La jupe 48 est apte à former une butée pour entraver le passage du canon entre la position à vide et la position de soudage. La jupe 48 est apte à entraver le passage du canon entre la position à vide et la position de soudage. La jupe 48 est apte à entraver le passage du canon entre la position à vide et la position de soudage si le dispositif est dans un positionnement incorrect. La jupe 48 est apte à entraver le passage du canon entre la position à vide et la position de soudage si le dispositif est dans un positionnement incorrect par rapport au container. La jupe 48 est apte à entraver ou autoriser le passage du canon entre la position à vide et la position de soudage. La jupe 48 est apte à entraver le passage du canon entre la position à vide et la position de soudage si le dispositif est dans un positionnement incorrect, notamment par rapport au container, ou est apte à autoriser le passage du canon entre la position à vide et la position de soudage si le dispositif est dans un positionnement correct, notamment par rapport au container. Si le container 12 et le dispositif 10 sont correctement positionnés l'un par rapport à l'autre, la jupe 48 entoure correctement le bouchon 42 et une extrémité 46 du canon vient en appui contre le bouchon 42. Le container 12 sollicite l'extrémité 46 et provoque alors le déplacement du canon 18, par exemple verticalement par rapport à la jupe 48. La jupe 48 autorise le passage du canon entre la position à vide et la position de soudage. Le canon 18 subit une translation, dans le sens vertical vers le haut sur la figure 2. La translation du canon 18 permet alors le changement d'état de l'obturateur 22, vers l'état ouvert (ou position de soudage du canon). Les capteurs autorisent le tir du laser. Si le container 12 et le dispositif 10 ne sont pas convenablement positionnés (c'est-à-dire incorrectement positionnés) l'un par rapport à l'autre, la jupe 48 n'entoure pas correctement le bouchon 42. Le container 12 ne sollicite pas l'extrémité 46 du canon 18 et ne provoque pas le déplacement du canon 18. La jupe 48 percute le container 12, et en particulier le bouchon 42. La jupe 48 entrave le passage du canon entre la position à vide et la position de soudage. L'obturateur 22 reste dans son état fermé (ou position de repos du dispositif et position à vide du canon). La jupe 48 peut entourer le canon - et en particulier à proximité de l'extrémité inférieure du canon - le canon étant mobile par rapport à la jupe 48. La jupe 48 entrave le mouvement du canon 18 vers l'intérieur du dispositif si le dispositif 10 est dans un positionnement incorrect, notamment par rapport au container (positionnement relatif). La jupe 48 autorise le mouvement du canon 18 vers l'intérieur du dispositif si le dispositif 10 est dans un positionnement correct, notamment par rapport au container. Si le dispositif 10 n'est pas correctement centré sur le container, La jupe 48 entrave le mouvement du canon 18 vers l'intérieur du dispositif. La jupe 48 permet donc d'augmenter la sécurité du dispositif 10 en évitant un tir intempestif si le dispositif 10 n'est pas correctement positionné. Également, en cas d'absence de container 12, le dispositif peut prendre appui contre un élément de l'environnement, ce qui correspondrait à un positionnement incorrect. La jupe 48 entrave alors le passage du canon entre la position à vide et la position de soudage (en formant butée) et donc empêche l'obturateur 22 de passer de l'état fermé à l'état ouvert.

En outre, la jupe 48 peut assurer un centrage précis du dispositif par rapport au container ; la jupe 48 vient précisément en appui contre le container 12 - voire, sur la bague 44 dans l'exemple du container de figure 2 - et le canon est appliqué précisément contre le container 12 - sur le bouchon 42 dans l'exemple du container de la figure 2. La jupe 48 peut être un cylindre de centrage du dispositif 10 par rapport au container 12. La jupe 48 assure une étanchéité au laser entre l'intérieur du dispositif 10 et l'extérieur, dans le sens où on évite toute sortie du laser par réflexion sur le bouchon. Egalement, la jupe assure de procéder au soudage à l'emplacement du percement du bouchon par l'aiguille. Ainsi, le dispositif 10 d'une part améliore la sécurité et d'autre part assure un soudage de qualité.

Le dispositif 10 peut aussi comprendre des orifices 50, 52 d'aération, selon les figures 1 et 2. Les orifices 50, 52 permettent l'aération de l'intérieur du dispositif 10. De préférence, l'aération a lieu entre deux tirs, ou en d'autres termes, entre le soudage de deux containers 12. Ainsi, des fumées provoquées par le soudage d'un bouchon lors d'un tir sont évacuées par les orifices 50, 52 avant le tir suivant. Plus spécifiquement, la jupe 48 peut être pourvue d'orifices 50 sur une circonférence de la jupe 48 et le canon 18 d'orifices 52 à proximité de l'extrémité 46, sur la circonférence du canon. En position à vide du canon 1 sur la figure 1, les orifices 50, 52 sont en regard les uns des autres. Ainsi, en l'absence de container 12, les orifices 50, 52 en regard permettent la libération de la fumée générée par le tir précédent. En position de soudage du canon 18 sur la figure 2, les orifices 50, 52 ne sont plus en regard les uns des autres. En raison du déplacement du canon 18 en appui sur le container 12, les orifices 50, 52 sont décalés axialement les uns par rapport aux autres. Les orifices 50 sont obturés par le canon 18 et les orifices 52 sont obturés par la jupe 48. Ceci garantit l'étanchéité au laser entre l'intérieur du dispositif 10 et l'extérieur. En outre, une aspiration de la fumée peut être prévue, en combinaison des orifices.

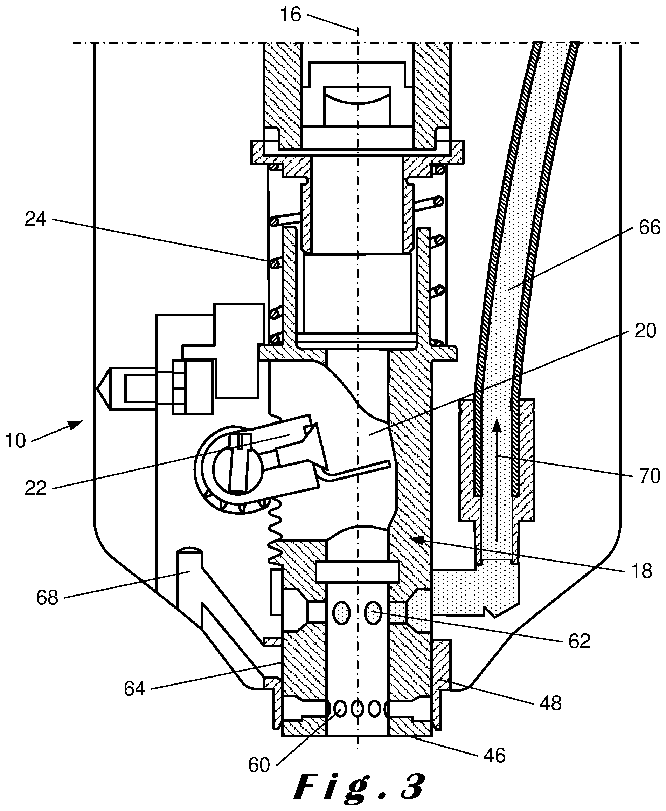

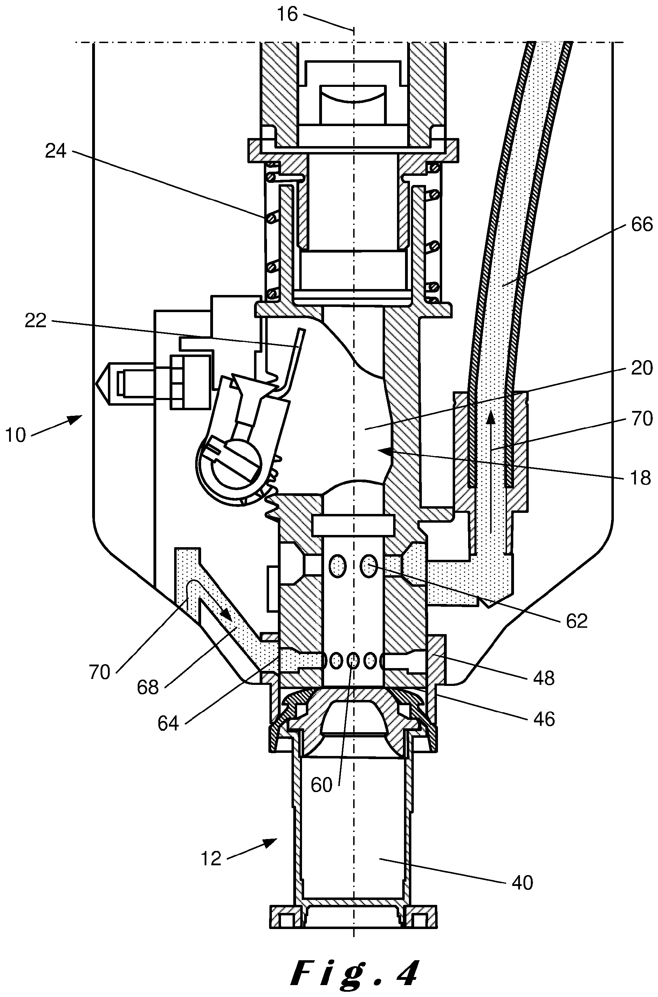

Les figures 3 et 4 montrent un autre exemple d'orifices 60, 62, 64 d'aération. Le canon 18 peut comporter des orifices 60 à proximité de son extrémité 46, et des orifices 62 plus vers l'intérieur du dispositif 10. Une aspiration 66 est apte à aspirer des fumées au travers des orifices 62. Plus, spécifiquement, l'aspiration 66 peut être toujours au moins en partie en regard des orifices 62, quelle que soit la position du canon 18 (à vide ou de soudage). Une entrée d'air 68 latérale est prévue pour permettre à de l'air ambiant de pénétrer dans le dispositif 10. Des orifices 64 dans la jupe 48 sont aptes à relier l'entrée d'air 68 avec l'intérieur du canon 18, lorsque le canon est en position de soudage. Les orifices 64 sont obturés lorsque le canon est en position à vide. Lorsque le canon est relâché (en position à vide), l'air entre par l'orifice principal de sortie du canon puisqu'il n'y a pas de container, et est aspiré par l'aspiration 66. Cela ventile bien le canon entre les tirs. Lorsque le container est en place et pousse sur le canon pour le faire rentrer vers la position de soudage selon la figure 4 (canon haut), cela libère l'entrée d'air 68 car les orifices 60 sont en regard des orifices 64 de la jupe 48. Cela permet un flux d'air d'entrer dans le dispositif 10 par l'entrée d'air 68, de passer par les orifices 64, 60 dans le canon puis d'être évacué par les orifices 62 vers l'aspiration 66. Ainsi, la fumée est évacuée durant le tir (le soudage) également. Le flux d'air est schématisé par les flèches 70. Ceci permet de ventiler en permanence le dispositif 10. L'entrée d'air 68 peut être telle qu'elle piège la réflexion éventuelle du laser, pour l'empêcher de sortir du canon. La forme de l'entrée d'air 68 peut permettre un tel piège. Par exemple, l'entrée d'air 68 est coudée. La jupe 48 permet en outre une étanchéité au laser entre l'intérieur du dispositif et l'extérieur, dans le sens où on évite toute sortie du laser par réflexion sur le bouchon. L'aspiration 66 peut aussi être aménagée dans le mode de réalisation des figures 1 et 2.

L'invention concerne aussi un procédé de soudage du container 12, le container étant apte à contenir la substance médicinale. Le procédé comprend la fourniture du dispositif 10, le boiter 18 étant dans la position à vide. Puis, un container 12 est chargé dans la continuité du canon - au droit de l'extrémité 46. Ensuite, le dispositif 10 est mis en position de soudage sur le container. Le dispositif 10 et le container sont déplacés l'un vers l'autre. Par exemple, le dispositif est déplacé vers le container. Le dispositif 10 se rapproche du container. Si le positionnement du dispositif est incorrect, notamment par rapport au container, la jupe 48 forme butée, notamment contre le container. La jupe 48 entrave le passage du canon entre la position à vide et la position de soudage. Si le positionnement du dispositif est correct, notamment par rapport au container, la jupe 48 autorise le passage du canon entre la position à vide et la position de soudage. A cet effet, la jupe 48 est appliquée autour du container 12 (et plus précisément, du bouchon 42) ce qui permet aussi le centrage du dispositif 10 par rapport au container et l'application précise de l'extrémité 46 contre le bouchon. Puis le procédé comprend une étape de soudage du container 12, par un tir du laser. Dans la position à vide, l'obturateur 22 est dans l'état de la figure 1, à savoir fermé. Dans la position de soudage, l'obturateur 22 est dans l'état de la figure 2, à savoir ouvert. Selon un aspect, le tir du laser est possible si le capteur de détection de l'ouverture de l'obturateur détecte l'ouverture de l'obturateur et si le capteur de détection de fermeture de l'obturateur ne détecte pas la fermeture de l'obturateur. Le tir du laser est interdit si le capteur de détection de l'ouverture de l'obturateur ne détecte pas l'ouverture de l'obturateur et si le capteur de détection de fermeture de l'obturateur détecte la fermeture de l'obturateur. Le procédé permet le soudage d'une série de containers ; pour cela le dispositif est déplacé pour un positionnement sur un autre container avec le tir du laser interdit par le canon en position à vide. Le procédé peut comprendre une ou des étapes d'aération des fumées au travers des orifices 50, 52, 60, 62, 66. L'aération au travers des orifices peut être naturelle ou par aspiration des fumées. Par exemple, entre deux étapes de soudage de container, le dispositif est aéré au travers des orifices 50, 52 en regard. L'aspiration 66 peut évacuer les fumées durant le soudage de container et/ou entre deux étapes de soudage. Au cours d'une étape de soudage, l'étanchéité à l'intérieur du dispositif 10 est assurée par l'obturation des orifices 50, 52 ou par la forme de l'entrée d'air 68. Les avantages du dispositif sont applicables au procédé et inversement.

L'invention vise donc un dispositif et un procédé de soudage d'un bouchon de container apte à contenir une substance médicinale. Le dispositif peut comprendre une pluralité d'éléments de sécurité qui peuvent être pris individuellement ou en combinaison pour renforcer encore la sécurité :
- l'obturateur 22 apte à être dans un état ouvert ou un état fermé,
- la jupe 48 apte à (former butée pour) entraver le passage du canon entre la position à vide et la position de soudage ou à autoriser le passage du canon entre la position à vide et la position de soudage,
- la jupe 48 peut permettre une étanchéité au laser entre l'intérieur du dispositif et l'extérieur, dans le sens où on évite toute sortie du laser par réflexion sur le bouchon,
- des capteurs de détection d'ouverture de l'obturateur et de détection de fermeture de l'obturateur, possiblement actionnés par des éléments différents du dispositif.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus. Par exemple, les capteurs de détection d'ouverture et de fermeture de l'obturateur peuvent être actionnés par le canon et par l'obturateur respectivement, ou inversement.

## Revendications

1. Dispositif (10) de soudage d'un bouchon de container (12) apte à contenir une substance médicinale, le dispositif comprenant
• Un laser de soudage du container,
• Un canon (18) définissant une chambre de tir du laser, le canon étant mobile entre plusieurs positions dont une position de soudage du container et une position à vide,
• Un obturateur (22) du laser, le canon ouvrant l'obturateur dans la position de soudage et fermant l'obturateur dans la position à vide,
**caractérisé en ce que** le dispositif comprend : Une jupe (48) qui entoure une partie inférieure du canon (18), apte à entraver ou autoriser le passage du canon entre la position à vide et la position de soudage.

2. Dispositif selon la revendication 1, dans lequel l'obturateur (22) est mobile en rotation et/ou le canon (18) est mobile en translation.

3. Dispositif selon l'une des revendications 1 ou 2, dans lequel l'obturateur (22) est inaccessible depuis l'extérieur du dispositif.

4. Dispositif selon l'une des revendications 1 à 3, comprenant en outre des capteurs de détection de l'ouverture et de la fermeture de l'obturateur (22), la détection de l'ouverture ou de la fermeture de l'obturateur (22) autorisant ou interdisant le tir par le laser.

5. Dispositif selon la revendication 4, dans lequel un capteur de détection de l'ouverture de l'obturateur (22) et un capteur de détection de fermeture de l'obturateur (22) sont actionnés par des éléments différents du dispositif, de préférence un capteur de l'ouverture de l'obturateur (22) est actionné par le canon et un capteur de fermeture de l'obturateur est actionné par l'obturateur.

6. Dispositif selon l'une des revendications 1 à 5, dans lequel la jupe (48), lors de son utilisation, est apte à entraver le passage du canon entre la position à vide et la position de soudage si le dispositif est dans un positionnement incorrect par rapport au container ou est apte à autoriser le passage du canon entre la position à vide et la position de soudage si le dispositif est dans un positionnement correct par rapport au container.

7. Dispositif selon l'une des revendications précédente, dans lequel la jupe (48), lors de son utilisation, est un cylindre de centrage sur un container à souder.

8. Dispositif selon l'une des revendications 1 à 7, comprenant en outre des orifices (50, 52, 60, 62, 64) d'aération.

9. Dispositif selon la revendication 8, dans lequel des orifices (50) portés par un boîtier (11) du dispositif sont en regard des orifices (52) du canon dans la position à vide du canon et sont obturés dans la position de soudage du canon.

10. Dispositif selon la revendication 8 ou 9, comprenant en outre une aspiration (66) apte à aspirer des fumées au travers des orifices.

11. Procédé de soudage d'un bouchon de container apte à contenir une substance médicinale, le procédé comprenant les étapes de
• Fourniture d'un dispositif (10) selon l'une des revendications 1 à 10, le canon étant en position à vide,
• Positionnement du dispositif sur un container,
• Soudage du bouchon du container.

12. Procédé selon la revendication 11 le dispositif (10) comprenant en outre un capteur de détection de l'ouverture de l'obturateur et un capteur de détection de la fermeture de l'obturateur,
• Le tir du laser étant possible si le capteur de détection de l'ouverture de l'obturateur détecte l'ouverture de l'obturateur et/ou si le capteur de détection de fermeture de l'obturateur ne détecte pas la fermeture de l'obturateur ;
• Le tir du laser étant interdit si le capteur de détection de l'ouverture de l'obturateur ne détecte pas l'ouverture de l'obturateur et/ou si le capteur de détection de fermeture de l'obturateur détecte la fermeture de l'obturateur.

13. Procédé selon l'une des revendications 11 ou 12 , dans lequel, à l'étape de positionnement, la jupe (48) est apte à entraver le passage du canon entre la position à vide et la position de soudage si le dispositif est dans un positionnement incorrect par rapport au container ou est apte à autoriser le passage du canon entre la position à vide et la position de soudage si le dispositif est dans un positionnement correct par rapport au container.

14. Procédé selon l'une des revendications 11 à 13, le dispositif (10) comprenant des orifices (50, 52, 60, 62, 66) d'aération, le procédé comprend une étape d'aération de fumées, de préférence, l'aération de fumées est faite par aspiration des fumées.

15. Procédé selon la revendication précédente, le procédé comprenant
• entre deux étapes de soudage de container, l'aération du dispositif (10) au travers des orifices (50, 52) en regard, et
• au cours d'une étape de soudage, l'étanchéité à l'intérieur du dispositif (10) par l'obturation des orifices (50, 52).

## Patentansprüche

1. Vorrichtung (10) zum Schweißen einer Kappe eines Behälters (12), der imstande ist, eine medizinische Substanz zu enthalten, wobei die Vorrichtung umfasst
- einen Laser zum Schweißen des Behälters,
- eine Kanone (18), die eine Schusskammer des Lasers definiert, wobei die Kanone zwischen mehreren Positionen, darunter einer Schweißposition des Behälters und einer Leerlaufposition beweglich ist,
- einen Verschluss (22) des Lasers, wobei die Kanone den Verschluss in der Schweißposition öffnet und den Verschluss in der Leerlaufposition schließt, **dadurch gekennzeichnet, dass** die Vorrichtung umfasst: eine Schürze (48), die einen unteren Teil der Kanone (18) umgibt, die imstande ist, den Übergang der Kanone zwischen der Leerlaufposition und der Schweißposition zu hemmen oder freizugeben.

2. Vorrichtung nach Anspruch 1, wobei der Verschluss (22) drehbeweglich ist und/oder die Kanone (18) vorschubbeweglich ist.

3. Vorrichtung nach einem der Ansprüche 1 oder 2, wobei der Verschluss (22) von außerhalb der Vorrichtung nicht zugänglich ist.

4. Vorrichtung nach einem der Ansprüche 1 bis 3, die weiter Sensoren zum Erkennen des Öffnens und des Schließens des Verschlusses (22) umfasst, wobei das Erkennen des Öffnens oder des Schließens des Verschlusses (22) den Schuss mit dem Laser erlaubt oder untersagt.

5. Vorrichtung nach Anspruch 4, wobei ein Sensor zum Erkennen des Öffnens des Verschlusses (22) und ein Sensor zum Erkennen des Schließens des Verschlusses (22) durch unterschiedliche Elemente der Vorrichtung betätigt werden, vorzugsweise wird ein Sensor zum Erkennen des Öffnens des Verschlusses (22) durch die Kanone betätigt wird, und ein Sensor zum Erkennen des Schließens des Verschlusses durch den Verschluss betätigt wird.

6. Vorrichtung nach einem der Ansprüche 1 bis 5, wobei die Schürze (48) bei deren Verwendung imstande ist, den Übergang der Kanone zwischen der Leerlaufposition und der Schweißposition zu hemmen, wenn sich die Vorrichtung in einer in Bezug zum Behälter falschen Positionierung befindet, oder imstande ist, den Übergang der Kanone zwischen der Leerlaufposition und der Schweißposition freizugeben, wenn sich die Vorrichtung in einer in Bezug zum Behälter richtigen Positionierung befindet.

7. Vorrichtung nach einem der vorstehenden Ansprüche, wobei die Schürze (48) bei deren Verwendung ein Zylinder zum Zentrieren auf einem zu schweißenden Behälter ist.

8. Vorrichtung nach einem der Ansprüche 1 bis 7, die weiter Lüftungsöffnungen (50, 52, 60, 62, 64) umfasst.

9. Vorrichtung nach Anspruch 8, wobei Öffnungen (50), die von einem Gehäuse (11) der Vorrichtung getragen werden, gegenüber den Öffnungen (52) der Kanone in der Leerlaufposition der Kanone liegen und in der Schweißposition der Kanone verschlossen sind.

10. Vorrichtung nach Anspruch 8 oder 9, die weiter eine Absaugung (66) umfasst, die imstande ist, Rauch durch die Öffnungen hindurch abzusaugen.

11. Verfahren zum Schweißen einer Kappe eines Behälters, der imstande ist, eine medizinische Substanz zu enthalten, wobei das Verfahren die Schritte umfasst zum
- Bereitstellen einer Vorrichtung (10) nach einem der Ansprüche 1 bis 10, wobei sich die Kanone in Leerlaufposition befindet,
- Positionieren der Vorrichtung auf einem Behälter,
- Schweißen der Kappe des Behälters.

12. Verfahren nach Anspruch 11 wobei die Vorrichtung (10) weiter einen Sensor zum Erkennen des Öffnens des Verschlusses und einen Sensor zum Erkennen des Schließens des Verschlusses umfasst,
- wobei der Schuss des Lasers möglich ist, wenn der Sensor zum Erkennen des Öffnens das Öffnen des Verschlusses erkennt und/oder wenn der Sensor zum Erkennen des Schließens des Verschlusses das Schließen des Verschlusses nicht erkennt;
- wobei der Schuss des Lasers untersagt ist, wenn der Sensor zum Erkennen des Öffnens das Öffnen des Verschlusses nicht erkennt und/oder wenn der Sensor zum Erkennen des Schließens des Verschlusses das Schließen des Verschlusses erkennt.

13. Verfahren nach einem der Ansprüche 11 oder 12, wobei die Schürze (48) beim Schritt zum Positionieren imstande ist, den Übergang der Kanone zwischen der Leerlaufposition und der Schweißposition zu hemmen, wenn sich die Vorrichtung in einer in Bezug zum Behälter falschen Positionierung befindet, oder imstande ist, den Übergang der Kanone zwischen der Leerlaufposition und der Schweißposition freizugeben, wenn sich die Vorrichtung in einer in Bezug zum Behälter richtigen Positionierung befindet.

14. Verfahren nach einem der Ansprüche 11 bis 13, wobei die Vorrichtung (10) Lüftungsöffnungen (50, 52, 60, 62, 66) umfasst, wobei das Verfahren einen Rauchlüftungsschritt umfasst, wobei die Rauchlüftung vorzugsweise durch Absaugen des Rauches durchgeführt wird.

15. Verfahren nach dem vorstehenden Anspruch, wobei das Verfahren umfasst
- zwischen zwei Behälterschweißschritten das Lüften der Vorrichtung (10) durch einander gegenüberliegende Öffnungen (50, 52) hindurch, und
- im Laufe eines Schweißschrittes das Abdichten im Inneren der Vorrichtung (10) durch Verschließen der Öffnungen (50, 52).

## Claims

1. A device (10) for welding a cap of a container (12) suitable for containing a medicinal substance, the device comprising
• A laser for welding the container,
• A barrel (18) defining a laser firing chamber, the barrel being movable between multiple positions including a container welding position and an unloaded position,
• A laser shutter (22), the barrel opening the shutter in the welding position and closing the shutter in the unloaded position,
**characterised in that** the device comprises: a skirt (48) surrounding a lower part of the barrel (18), suitable for preventing or allowing the barrel to move between the unloaded position and the welding position.

2. The device according to claim 1, wherein the shutter (22) is movable in rotation and/or the barrel (18) is mobile in translation.

3. The device according to one of claims 1 or 2, wherein the shutter (22) is inaccessible from outside the device.

4. The device according to one of claims 1 to 3, further comprising sensors for detecting the opening and closing of the shutter (22), the detection of the opening or closing of the shutter (22) allowing or prohibiting firing by the laser.

5. The device according to claim 4, wherein a sensor for detecting the opening of the shutter (22) and a sensor for detecting the closure of the shutter (22) are actuated by different elements of the device, preferably a sensor for detecting the opening of the shutter (22) is actuated by the barrel and a sensor for detecting the closure of the shutter is actuated by the shutter.

6. The device according to one of claims 1 to 5, wherein the skirt (48), in use, is suitable for preventing the passage of the barrel between the unloaded position and the welding position if the device is incorrectly positioned relative to the container, or is suitable for allowing the passage of the barrel between the unloaded position and the welding position if the device is correctly positioned relative to the container.

7. The device according to one of the preceding claims, wherein the skirt (48), in use, is a centring cylinder on a container to be welded.

8. The device according to one of claims 1 to 7, further comprising ventilation orifices (50, 52, 60, 62, 64).

9. The device according to claim 8, wherein orifices (50) carried by a housing (11) of the device are facing the orifices (52) of the barrel in the unloaded position of the barrel and are closed in the welding position of the barrel.

10. The device as claimed in claim 8 or 9, further comprising a suction (66) suitable for sucking fumes through the orifices.

11. A method for welding a cap of a container suitable for containing a medicinal substance, the method comprising the steps of
• Providing a device (10) according to one of claims 1 to 10, the barrel being in the unloaded position,
• Positioning the device on a container,
• Welding the cap of a container.

12. The method according to claim 11, the device (10) further comprising a sensor for detecting the opening of the shutter and a sensor for detecting the closure of the shutter,
• The firing of the laser is possible if the sensor for detecting the opening of the shutter detects the opening of the shutter and/or if the sensor for detecting the closure of the shutter does not detect that the shutter is closed;
• The firing of the laser is prohibited if the sensor for detecting the opening of the shutter does not detect the opening of the shutter and/or if the sensor for detecting the closure of the shutter detects that the shutter is closed.

13. The method according to one of claims 11 to 12, wherein, at the positioning step, the skirt (48) is suitable for preventing the passage of the barrel between the unloaded position and the welding position if the device is in an incorrect position relative to the container or is suitable for allowing the passage of the barrel between the unloaded position and the welding position if the device is in a correct position relative to the container.

14. The method according to one of claims 11 to 13, the device (10) comprising ventilation orifices (50, 52, 60, 62, 66), the method comprising a fume ventilation step, preferably the fumes are vented by suction.

15. The method according to the preceding claim, the method comprising
• between two container welding steps, the ventilation of the device (10) through the facing orifices (50, 52), and
• during a welding step, sealing the inside of the device (10) by shutting off the orifices (50, 52).
